# EUROPÄISCHE PATENTSCHRIFT

(11) **EP 3 529 102 B1**
(45) Veröffentlichungstag und Bekanntmachung des Hinweises auf die Patenterteilung: **07.12.2022**
(21) Anmeldenummer: 17777590.5
(22) Anmeldetag: 02.10.2017
(51) Int. Cl.: H02M 3/335, H02M 7/48, H02J 7/00

(54) **GLEICHSPANNUNGSWANDLER UND VERFAHREN ZUM BETRIEB EINES GLEICHSPANNUNGSWANDLERS**
DC/DC CONVERTER AND METHOD FOR OPERATING A DC/DC CONVERTER
CONVERTISSEUR CONTINU-CONTINU ET PROCÉDÉ POUR OPÉRER UN CONVERTISSEUR CONTINU-CONTINU

(30) Priorität: 18.10.2016 DE 102016220354
(43) Veröffentlichungstag der Anmeldung: 28.08.2019
(73) Patentinhaber: Robert Bosch GmbH, 70442 Stuttgart (DE)
(72) Erfinder: GUDINO CARRIZALES, Emiliano, 71638 Ludwigsburg (DE)
(86) Internationale Anmeldenummer: PCT/EP2017/074986
(87) Internationale Veröffentlichungsnummer: WO 2018/072987

(56) Entgegenhaltungen:
- EP-A1- 2 562 918
- GB-A- 238 281
- JP-A- 2003 164 149
- JP-A- 2010 287 395
- JP-A- 2013 140 915
- KR-A- 20150 049 060
- US-A1- 2006 176 719
- US-A1- 2007 236 966
- US-B1- 7 869 237

## Beschreibung

Die vorliegende Erfindung betrifft einen Gleichspannungswandler sowie ein Verfahren zum Betrieb eines Gleichspannungswandlers.

### Stand der Technik

Bei Elektro- oder Hybridfahrzeugen kann elektrische Energie zwischen einem Hochvoltnetz und einem Niedervoltnetz übertragen werden. Für die dabei erforderliche galvanische Trennung können beispielsweise einphasige Phase-Shifted-Full-Bridge (PSFB) Gleichspannungswandler eingesetzt werden. Derartige Gleichspannungswandler können bidirektional betrieben werden, das heißt es kann sowohl elektrische Energie vom Niedervoltnetz in das Hochvoltnetz übertragen werden, als auch von dem Hochvoltnetz in das Niedervoltnetz.

Die Druckschrift EP 2 562 9 18 A1 offenbart einen DC/DC Konverter mit einem elektronischen Schalter. Die Druckschrift US 2006/176719 A1 offenbart einen sanft schaltenden DC/DC Konverter. Die Druckschrift US 2007/236966 A1 offenbart einen unidirektional arbeitenden DC/DC Konverter.

Die Druckschrift DE 10 2013 207 475 A1 offenbart einen Gleichspannungswandler mit einer Phase-Shifted-Full-Bridge. Der Wechselrichter weist zwei Halbbrücken mit jeweils zwei Halbleiterschaltern auf. Die zwei Halbbrücken sind ausgangsseitig mit einer Primärwicklung eines Transformators verbunden. Eine Sekundärwicklung des Transformators ist mit einem Gleichrichter verbunden. Der Gleichspannungswandler weist eine Steuereinheit auf, die mit den Steuereingängen der Halbleiterschalter verbunden ist, wobei die Steuereinheit die Halbbrücken zur Erzeugung einer Wechselspannung ansteuert. Die Steuereinheit ist dazu ausgebildet, einen Halbleiterschalter bei einem Spannungsnulldurchgang oder einem minimalen Spannungswert der Spannung über dem Halbleiterschalter leitend zu schalten.

### Offenbarung der Erfindung

Die vorliegende Erfindung offenbart einen Gleichspannungswandler mit den Merkmalen des Patentanspruchs 1 und ein Verfahren zum Betrieb eines Gleichspannungswandlers mit den Merkmalen des Patentanspruchs 6.

### Demgemäß ist vorgesehen:

Ein Gleichspannungswandler mit einem Wechselrichter, einem ersten Transformator, einem Gleichrichter und einer Kompensationseinrichtung. Der erste Transformator umfasst eine Primärwicklung und eine Sekundärwicklung. Der Wechselrichter ist an einem Eingang mit einem ersten Eingangsanschluss und einem zweiten Eingangsanschluss des Gleichspannungswandlers elektrisch gekoppelt. Ein Ausgang des Wechselrichters ist mit der Primärwicklung des ersten Transformators elektrisch gekoppelt. Der Gleichrichter ist eingangsseitig mit der Sekundärwicklung des ersten Transformators gekoppelt. Ausgangsseitig ist der Gleichrichter mit einem ersten Ausgangsanschluss und einem zweiten Ausgangsanschluss des Gleichspannungswandlers elektrisch gekoppelt. Die Kompensationseinrichtung umfasst einen zweiten Transformator und ein Schaltelement. Der zweite Transformator umfasst eine Primärwicklung und eine Sekundärwicklung. Die Primärwicklung des zweiten Transformators ist zwischen dem ersten Eingangsanschluss des Gleichspannungswandlers und einem Anschluss des Eingangs des Wechselrichters angeordnet. Ferner ist eine Serienschaltung aus dem Schaltelement der Kompensationseinrichtung und der Sekundärwicklung des zweiten Transformators zwischen dem ersten Eingangsanschluss und dem zweiten Eingangsanschluss des Gleichspannungswandlers angeordnet.

### Ferner ist vorgesehen:

Ein Verfahren zum Betrieb eines erfindungsgemäßen Gleichspannungswandlers mit den Schritten des Ladens der Primärwicklung des zweiten Transformators in der Kompensationseinrichtung und des anschließenden Entladens der Primärwicklung des zweiten Transformators in der Kompensationseinrichtung. Das Verfahren umfasst ferner einen Schritt zum Schließen des Schaltelements in der Kompensationseinrichtung für eine vorbestimmte Zeitdauer. Das Schließen des Schaltelements der Kompensationseinrichtung wird am Ende des Schritts zum Entladen der Primärwicklung des zweiten Transformators ausgeführt. Die zuvor beschriebenen Schritte können beliebig oft wiederholt werden.

### Vorteile der Erfindung

Die Schaltelemente eines Gleichspannungswandlers, insbesondere eines Phase-Shifted-Full-Bridge Gleichspannungswandlers werden in der Regel in Abhängigkeit der Ausgangsleistung hart geschaltet. Hierbei können Ein- und Ausschaltverluste in den Schaltelementen des Gleichspannungswandlers entstehen. Ferner kann in Abhängigkeit von den auftretenden Spannungen in dem Gleichspannungswandler ein sogenannter "Reverse-Recovery"-Effekt auftreten. Das heißt, bei einem Kommutierungsvorgang des elektrischen Stroms in dem Gleichspannungswandler kann eine Diode im Strompfad nicht sofort die Sperrspannung aufnehmen, sondern die Diode ist für eine kurze Zeitspanne leitfähig, obwohl eine negative Spannung anliegt (d.h. entgegen der Durchlassrichtung der Diode). Hierbei können kurze, sehr hohe Stromimpulse durch die Diode auftreten. Diese Stromimpulse verursachen sehr hohe Verluste. Konventionelle Body-Dioden, wie sie zusammen mit Halbleiterschaltelementen eingesetzt werden, sind in der Regel nicht für einen solchen Betriebsmodus ausgelegt. Daher besteht die Gefahr, dass bei einem längerfristigen Betrieb Bauteile beschädigt werden oder zumindest die Lebensdauer des Gleichspannungswandlers signifikant herabgesetzt wird.

Der vorliegenden Erfindung liegt daher die Idee zugrunde, der zuvor beschriebenen Erkenntnis Rechnung zu tragen und einen Gleichspannungswandler bereitzustellen, der die negativen Einflüsse aufgrund des beschriebenen Reverse-Recovery-Effekts eliminieren oder zumindest herabsetzen kann. Durch den erfindungsgemäßen Gleichspannungswandler und das entsprechende Betriebsverfahren kann der Reverse-Recovery-Effekt insbesondere in den Gleichrichterdioden eines Gleichspannungswandlers auf ein Minimum reduziert werden. Hierdurch ist es möglich, den Gleichspannungswandler auch im Hochsetz- und Dauerbetrieb einzusetzen. Insbesondere ist ein solcher Hochsetz- und Dauerbetrieb auch mit konventionellen Body-Dioden für die eingesetzten Halbleiterschaltelemente möglich.

Durch die Minimierung des Reverse-Recovery-Effekts kann der Gleichspannungswandler dauerhaft als Hochsetzsteller eingesetzt werden. Die hierbei maximal übertragbare Ausgangsleistung ist nicht mehr durch die Verlustleistung beim Ausschalten der Halbleiterdioden begrenzt. Insbesondere kann somit der Gleichspannungswandler als Hochsetzsteller in einem kontinuierlichen Betrieb dauerhaft eingesetzt werden. Dabei kann auch ein verbesserter Wirkungsgrad des Hochsetzstellers im Dauerbetrieb erreicht werden. Ferner weist der erfindungsgemäße Gleichspannungswandler in diesem Betrieb auch deutlich verbesserte Eigenschaften hinsichtlich der elektromagnetischen Verträglichkeit auf.

Gemäß einer Ausführungsform des Gleichspannungswandlers umfasst die Kompensationseinrichtung ferner eine Diode. Diese Diode ist gemeinsam mit dem Schaltelement der Kompensationseinrichtung und der Sekundärseite des zweiten Transformators in einer Serienschaltung zwischen dem ersten Eingangsanschluss und dem zweiten Eingangsanschluss des Gleichspannungswandlers angeordnet. Auf diese Weise kann sichergestellt werden, dass die Kompensationseinrichtung nur einen gerade fließenden elektrischen Strom kompensiert, ohne hierbei einen elektrischen Strom in die entgegengesetzte Richtung einzuprägen.

Gemäß einer Ausführungsform umfasst das Schaltelement der Kompensationseinrichtung einen Metalloxid-Feldeffekt-Transistor (MOSFET). Derartige Transistoren sind als Schaltelemente besonders gut geeignet.

Erfindungsgemäß ist die Kompensationseinrichtung dazu ausgelegt, das Schaltelement der Kompensationseinrichtung für eine vorbestimmte Zeitdauer zu schließen bevor ein elektrischer Strom in dem Gleichrichter des Gleichspannungswandlers kommutiert. Durch das Schließen des Schaltelements in der Kompensationseinrichtung kann ein eventuell in dem Wechselrichter fließender elektrischer Strom aufgrund der Kopplung zwischen Primärwicklung und Sekundärwicklung des zweiten Transformators rasch abgebaut werden. Primärwicklung und Sekundärwicklung des zweiten Transformators sind entgegengesetzt miteinander verkoppelt.

Gemäß einer Ausführungsform umfasst der Wechselrichter des Gleichspannungswandlers zwei Halbbrücken mit jeweils zwei Halbleiterschaltern. Derartige Topologien für einen Wechselrichter sind für den erfindungsgemäßen Gleichspannungswandler besonders geeignet. Als Halbleiterschalter sind beispielsweise MOSFET oder bipolare Transistoren mit einem isolierten Gateanschluss (IGBT) möglich. Parallel zu dem Schaltelement kann eine sogenannte Bodydiode vorgesehen sein.

Gemäß einer Ausführungsform umfasst der Gleichrichter des Gleichspannungswandlers einen aktiven Synchrongleichrichter. Insbesondere kann der aktive Synchrongleichrichter durch Halbleiterschaltelemente mit einer parallel angeordneten Bodydiode realisiert werden. Aktive Synchrongleichrichter weisen einen sehr guten Wirkungsgrad auf. Darüber hinaus kann bei einer derartigen Konfiguration der Gleichspannungswandler auch in umgekehrter Richtung betrieben werden. Auch für den Gleichrichter sind z.B. MOSFET möglich.

Bei dem Verfahren zum Betrieb des Gleichspannungswandlers umfasst erfindungsgemäß das Laden der Primärwicklung des zweiten Transformators in der Kompensationseinrichtung ein Bereitstellen einer elektrischen Verbindung zwischen den Anschlüssen des Eingangs des Wechselrichters. Die elektrische Verbindung kann beispielsweise durch das Schließen aller Schaltelemente in dem Wechselrichter erfolgen.

Erfindungsgemäß umfasst der Schritt zum Entladen der Primärwicklung des zweiten Transformators in der Kompensationseinrichtung das Bereitstellen einer elektrischen Verbindung durch die Primärwicklung des ersten Transformators. Insbesondere kann dabei die Polarität der an der Primärwicklung des ersten Transformators anliegenden Spannung bei zwei aufeinanderfolgenden Entladevorgängen gewechselt werden.

Gemäß einer Ausführungsform umfasst die vorbestimmte Zeitdauer, in der das Schaltelement der Kompensationseinrichtung jeweils geschlossen wird, maximal 400 ns. Die maximale Zeitdauer kann je nach Anwendungsfall auch nur 200 ns oder gegebenenfalls auch nur 100 ns umfassen.

Die obigen Ausgestaltungen und Weiterbildungen lassen sich, soweit sinnvoll, beliebig miteinander kombinieren. Weitere Ausgestaltungen, Weiterbildungen und Implementierungen der Erfindung umfassen auch nicht explizit genannte Kombinationen von zuvor oder im Folgenden bezüglich den Ausführungsbeispielen beschriebenen Merkmalen der Erfindung. Insbesondere wird der Fachmann dabei auch Einzelaspekte als Verbesserungen oder Ergänzungen zu den jeweiligen Grundformen der Erfindung hinzufügen.

### Kurze Beschreibung der Zeichnungen

Die vorliegende Erfindung wird nachfolgend anhand der in den schematischen Figuren der Zeichnungen angegebenen Ausführungsbeispiele näher erläutert. Dabei zeigen:
- Figur 1:: eine schematische Darstellung eines Prinzipschaltbilds, wie es einem Gleichspannungswandler gemäß einer Ausführungsform zugrunde liegt;
- Figur 2-4:: schematische Darstellungen der Stromverläufe in einem Gleichspannungswandler gemäß einer Ausführungsform; und
- Figur 5:: eine schematische Darstellung eines Ablaufdiagramms, wie es einem Verfahren zum Betrieb eines Gleichspannungswandlers gemäß einer Ausführungsform zugrunde liegt.

### Ausführungsformen der Erfindung

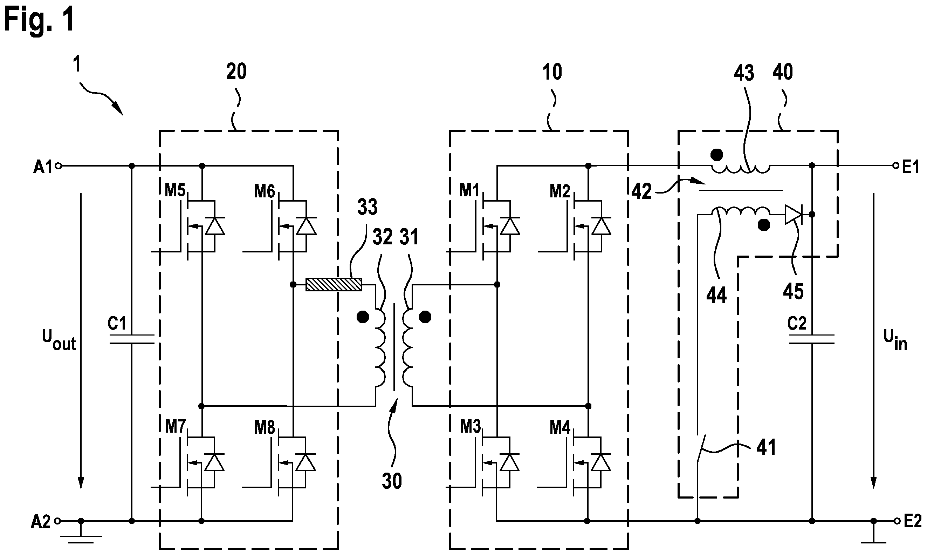

Figur 1 zeigt eine schematische Darstellung eines Prinzipschaltbilds, wie es einem Gleichspannungswandler 1 gemäß einer Ausführungsform zugrunde liegt. Der Gleichspannungswandler 1 umfasst einen Wechselrichter 10, einen Gleichrichter 20, einen ersten Transformator 30 und eine Kompensationseinrichtung 40. Zwischen einem ersten Eingangsanschluss E1 und einem zweiten Eingangsanschluss E2 des Gleichspannungswandlers 1 kann eine Eingangsgleichspannung Uin angelegt werden. Zur Glättung bzw. Pufferung der Eingangsgleichspannung Uin kann zwischen dem ersten und zweiten Eingangsanschluss E1, E2 ein Kondensator C2 vorgesehen sein. Der Gleichspannungswandler 1 konvertiert die Eingangsgleichspannung Uin in eine weitere Gleichspannung und stellt diese konvertierte Gleichspannung als Ausgangsgleichspannung Uout zwischen dem ersten Ausgangsanschluss A1 und dem zweiten Ausgangsanschluss A2 bereit. Hierbei kann auch zwischen dem ersten Ausgangsanschluss A1 und dem zweiten Ausgangsanschluss A2 ein Kondensator C1 vorgesehen sein. Insbesondere kann die Ausgangsgleichspannung Uout größer sein als die Eingangsgleichspannung Uin.

Der Gleichspannungswandler 1 kann darüber hinaus noch weitere Komponenten, Bauteile oder Baugruppen aufweisen. Diese sind jedoch zum besseren Verständnis hier nicht ausgeführt.

Der Wechselrichter 10 kann beispielsweise zwei Halbbrücken mit jeweils zwei Halbleiterschaltelementen M1 bis M4 umfassen. Ein erstes Schaltelement M1 kann zwischen einem oberen Knotenpunkt und einem ersten Anschluss der Primärwicklung 31 des ersten Transformators 30 angeordnet sein. Ein zweites Schaltelement M2 kann zwischen dem oberen Knotenpunkt und einem zweiten Anschluss der Primärwicklung 31 des ersten Transformators 30 vorgesehen sein. Ein drittes Schaltelement kann zwischen dem ersten Anschluss der Primärwicklung 31 des ersten Transformators 30 und dem zweiten Eingangsanschluss E2 vorgesehen sein. Ein viertes Schaltelement M4 schließlich kann zwischen dem zweiten Anschluss der Primärwicklung 31 des ersten Transformators 30 und dem zweiten Eingangsanschluss E2 vorgesehen sein. Als Halbleiterschalter sind beispielsweise MOSFET oder bipolare Transistoren mit einem isolierten Gateanschluss (IGBT) möglich. Parallel zu jedem Schaltelement kann eine Bodydiode vorgesehen sein.

Der Gleichrichter 20 des Gleichspannungswandlers 1 kann als aktiver Synchrongleichrichter ausgeführt sein. Insbesondere kann der Gleichrichter 20 analog zu dem Wechselrichter 10 als zwei Halbbrücken mit jeweils zwei Halbleiterschaltelementen M5 bis M8 ausgeführt sein. Ein erstes Schaltelement M5 des Gleichspannungswandlers kann zwischen einem ersten Ausgangsanschluss des Gleichspannungswandlers und einem ersten Anschluss der Sekundärwicklung 32 des Transformators 30 vorgesehen sein. Ein zweites Schaltelement M6 des Gleichspannungswandlers kann zwischen dem ersten Ausgangsanschluss A2 und einem zweiten Anschluss der Sekundärwicklung 32 des Transformators 30 vorgesehen sein. Ein drittes Schaltelement M7 kann zwischen einem zweiten Ausgangsanschluss A2 und dem ersten Anschluss der Sekundärwicklung 32 des Transformators 30 vorgesehen sein. Ein viertes Schaltelement M8 schließlich kann zwischen dem zweiten Ausgangsanschluss A2 und dem zweiten Anschluss der Sekundärwicklung 32 des Transformators 30 vorgesehen sein. Zwischen einem Knotenpunkt, der das zweite Schaltelement M6 und das vierte Schaltelement M8 des Gleichrichters 20 miteinander verbindet und dem zweiten Anschluss der Sekundärwicklung 32 des Transformators 30 kann eine Induktivität 33 vorgesehen sein. Alternativ kann diese Induktivität 33 auch durch die Streuinduktivität des Transformators 30 gebildet werden.

Die Kompensationseinrichtung 40 des Gleichspannungswandlers 1 umfasst einen zweiten Transformator 42 und ein Schaltelement 41. Ferner kann die Kompensationseinrichtung 40 eine Diode 45 umfassen. Eine Primärwicklung 43 des zweiten Transformators 42 der Kompensationseinrichtung 40 ist zwischen dem ersten Eingangsanschluss E1 und einem Eingangsanschluss des Wechselrichters 10 angeordnet. Das Schaltelement 41 der Kompensationseinrichtung 40 ist zwischen dem zweiten Eingangsanschluss E2 und einem Anschluss der Sekundärwicklung 44 des zweiten Transformators 42 der Kompensationseinrichtung 40 angeordnet. Der zweite Anschluss der Sekundärwicklung 44 des zweiten Transformators 42 der Kompensationseinrichtung 40 ist, gegebenenfalls über die Diode 45, mit dem ersten Eingangsanschluss E1 des Gleichspannungswandlers 1 verbunden.

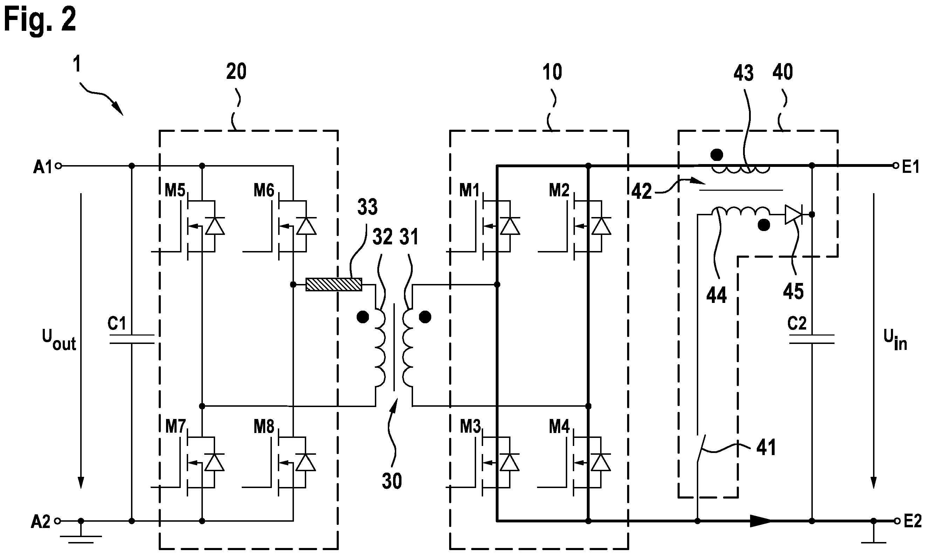

Nachfolgend wird das Betriebsprinzip des Gleichspannungswandlers 1 unter Bezug auf die Figuren 2 bis 4 näher beschrieben. Hierbei soll eine zwischen dem ersten Eingangsanschluss E1 und dem zweiten Eingangsanschluss E2 anliegende Eingangsgleichspannung Uin in eine höhere Ausgangsgleichspannung Uout zwischen dem ersten Ausgangsanschluss A1 und dem zweiten Ausgangsanschluss A2 konvertiert werden.

Figur 2 zeigt zunächst einen ersten Schritt, wobei die vier Schaltelemente M1 bis M4 des Wechselrichters 10 geschlossen sind. Wie durch den fett eingezeichneten Stromverlauf in Figur 2 zu erkennen ist, fließt dabei ein elektrischer Strom von dem ersten Eingangsanschluss E1 durch die Primärwicklung 43 des zweiten Transformators 42 der Kompensationseinrichtung 40 über die vier Schaltelemente M1 bis M4 des Wechselrichters zu dem zweiten Eingangsanschluss E2. Während sich dieser Stromfluss einstellt, wird in der Primärwicklung 43 des zweiten Transformators 42 der Kompensationseinrichtung 40 Energie gespeichert. Daher wird dieser Schritt als "Laden" bezeichnet.

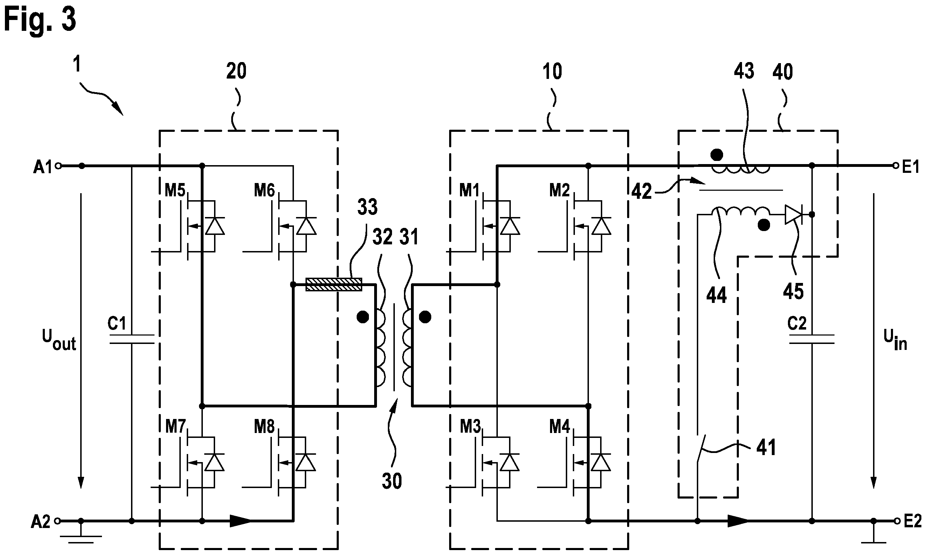

Anschließend werden, wie in Figur 3 dargestellt, zwei der vier Schaltelemente M1 bis M4 des Wechselrichters 10 geöffnet, so dass sich nun ein elektrischer Stromfluss durch die Primärwicklung 31 des ersten Transformators 30 einstellt. Beispielsweise können das erste Schaltelement M1 und das vierte Schaltelement M4 geöffnet werden, während das zweite Schaltelement M2 und das dritte Schaltelement M4 geschlossen bleiben. Alternativ können auch das zweite Schaltelement M2 und das dritte Schaltelement M3 geöffnet werden, während das erste Schaltelement M1 und das vierte Schaltelement M4 geschlossen bleiben. Während des operationalen Betriebs werden in der Regel die beiden gerade beschriebenen Schaltzustände abwechselnd eingestellt, so dass sich jeweils nacheinander ein entgegengesetzter Stromfluss durch die Primärwicklung 31 des Transformators 30 einstellt. Der elektrische Strom durch die Primärwicklung 31 des ersten Transformators 30 ruft auch in der Sekundärwicklung 32 des Transformators 30 einen elektrischen Stromfluss hervor. Durch ein entsprechendes Ansteuern der Schaltelemente M5 bis M8 in dem Gleichrichter 20 des Gleichspannungswandlers 1 kann hierdurch der Kondensator C1 zwischen dem ersten Ausgangsanschluss A1 und dem zweiten Ausgangsanschluss A2 aufgeladen werden. Während dieses Vorgangs wird die in der Primärwicklung 43 des zweiten Transformators 42 der Kompensationseinrichtung 40 gespeicherte elektrische Energie abgebaut. Daher wird dieser Vorgang als "Entladen" bezeichnet.

Nach dem Entladen schließt sich ein erneuter Schritt zum Laden an, und hierauf folgt ein weiterer Schritt zum Entladen, wobei in zwei aufeinanderfolgenden Entladeschritten jeweils ein entgegengesetzter Stromfluss durch die Primärwicklung 31 des ersten Transformators 30 eingestellt wird.

Ist die Ausgangsleistung des Gleichspannungswandlers klein, so wird der elektrische Strom durch die Primärwicklung 43 des zweiten Transformators 42 der Kompensationseinrichtung 40 am Ende des Entladevorgangs auf 0 A fallen. Somit können die Body-Dioden der Schaltelemente M5 bis M8 in dem Gleichrichter 20 stromlos ausschalten. Dieser Betriebsmodus wird als diskontinuierlicher Betrieb bezeichnet.

Bei größeren Ausgangsleistungen wird der elektrische Strom durch die Primärwicklung 43 des zweiten Transformators 42 der Kompensationseinrichtung 40 nicht mehr vollständig auf 0 A abfallen. Dieser Betriebsmodus wird als kontinuierlicher Betrieb bezeichnet. In diesem Fall können die Body-Dioden der Schaltelemente M5 bis M8 in dem Gleichrichter 20 nicht mehr stromlos ausschalten. Hierdurch steigen die Verluste aufgrund des Reverse-Recovery-Effekts.

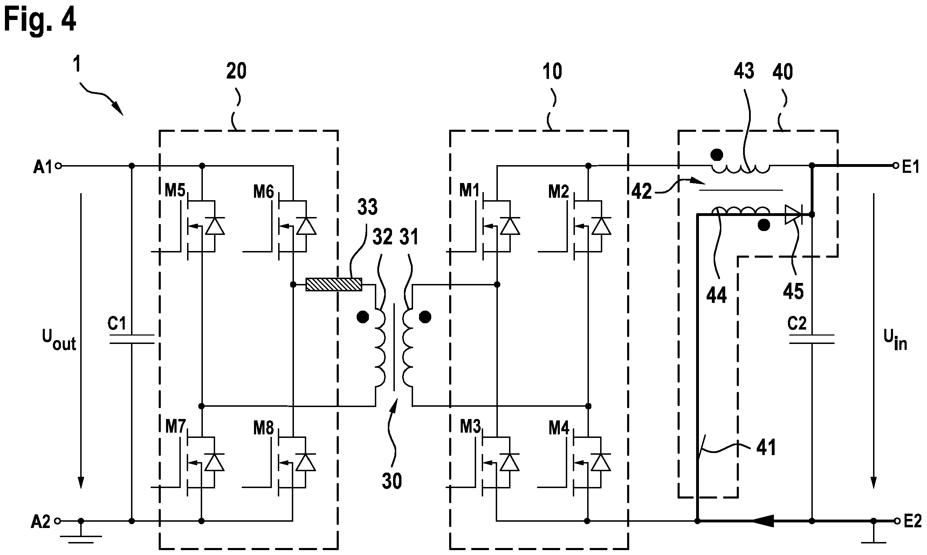

Zur Vermeidung bzw. Minimierung des Reverse-Recovery-Effekts und den damit verbundenen Verlusten wird am Ende des Entladevorgangs, kurz vor dem Umschalten in den Ladebetrieb das Schaltelement 41 der Kompensationseinrichtung 40 für eine vorbestimmte Zeitdauer kurzgeschlossen, wie in Fig. 4 dargestellt. Dieser Betriebsmodus wird als Freilauf bezeichnet. Dabei arbeiten die Primärwicklung 43 und die Sekundärwicklung 44 des zweiten Transformators 42 der Kompensationseinrichtung 40 als Sperrwandeltransformator. Die Primärwicklung 43 des zweiten Transformators 42 induziert in die Sekundärwicklung 44 des zweiten Transformators 42 eine Spannung. Da die Primärwicklung 43 und die Sekundärwicklung 44 des zweiten Transformators 42 entgegengesetzt verkoppelt sind, wirkt die Sekundärspannung an der Sekundärwicklung 43 der Primärspannung entgegen. Die Höhe der Sekundärspannung kann dabei entsprechend dem Übersetzungsverhältnis zwischen Primärwicklung 43 und Sekundärwicklung 44 des zweiten Transformators 42 eingestellt werden. Die in die Sekundärwicklung 44 induzierte Spannung verursacht einen Stromfluss, der durch das Schaltelement 41, die Sekundärwicklung 44 und die Diode 45 in den zwischen dem ersten Eingangsanschluss E1 und dem zweiten Eingangsanschluss E2 angeschlossenen Kondensator C2 und/oder eine an den ersten Eingangsanschluss E1 und den zweiten Eingangsanschluss E2 angeschlossene Spannungsquelle zurückfließt. Da auf diese Weise elektrische Energie an eine angeschlossene Spannungsquelle zurückgespeist wird, kann auch der Wirkungsgrad des Gleichspannungswandlers 1 erhöht werden.

Während des zuvor beschriebenen Vorgangs in dem Freilauf fällt der elektrische Strom durch die Primärwicklung 31 des ersten Transformators 30 auf etwa 0 A zurück. Die in der Streuinduktivität bzw. der Induktivität 33 an der Sekundärwicklung 32 des ersten Transformators 30 gespeicherte Energie wird durch die in dem Gleichspannungswandler10 leitenden Halbleiterbauelemente M1 und M4 bzw. M2 und M3 abgebaut. Die entsprechenden Bauelemente können somit stromlos ausschalten. Die Reverse-Recovery-Verluste werden auf diese Weise auf ein Minimum reduziert. Kurz nach dem Umschalten auf den oben beschriebenen Ladebetrieb wird das Schaltelement 41 der Kompensationseinrichtung 40 wieder geöffnet und es beginnt ein erneuter Zyklus von Laden und Entladen, der mit einem Freilauf erneut beendet wird.

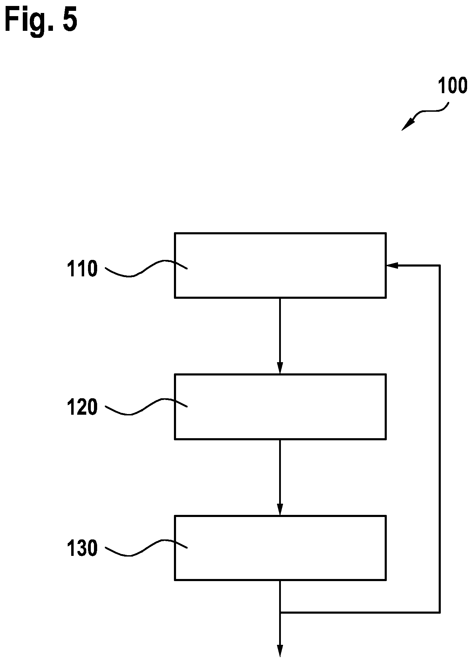

Figur 5 zeigt eine schematische Darstellung eines Ablaufdiagramms, wie es einem Verfahren zum Betrieb eines Gleichspannungswandlers gemäß einer Ausführungsform zugrunde liegt. Insbesondere kann das hier beschriebene Verfahren auf einen zuvor beschriebenen Gleichspannungswandler 1 angewendet werden. In Schritt 110 wird zunächst die Primärwicklung 43 des zweiten Transformators 42 der Kompensationseinrichtung 40 geladen. Anschließend wird in Schritt 120 die Primärwicklung 43 des zweiten Transformators 42 in der Kompensationseinrichtung 40 entladen. Das Laden 110 und das Entladen 120 sind bereits zuvor beschrieben. Am Ende des Entladevorgangs 120 wird das Schaltelement 41 der Kompensationseinrichtung 40 für eine vorbestimmte Zeitdauer geschlossen. Die vorbestimmte Zeitdauer kann beispielsweise maximal 400 ns betragen. Je nach Anwendungsfall sind jedoch auch größere oder auch kleinere Zeitspannen, beispielsweise 200 ns oder 100 ns möglich.

Das Laden der Primärwicklung 43 und das anschließende Entladen der Primärwicklung 43 des zweiten Transformators 42 können während des Betriebs des Gleichspannungswandlers 1 regelmäßig wiederholt werden. Dabei erfolgt jeweils am Ende des Entladevorgangs 120 ein Schließen 130 des Schaltelements 41 für den oben beschrienen Freilauf.

Zusammenfassend betrifft die vorliegende Erfindung einen Gleichspannungswandler mit verringerten Verlusten aufgrund eines Reverse-Recovery-Effektes. Hierzu ist an einem Eingang des Gleichspannungswandlers ein Transformator vorgesehen. Durch diesen Transformator kann für eine stromlose Kommutierung über den Transformator ein eventuell noch fließender elektrischer Strom kompensiert und somit abgebaut werden. Hierbei können insbesondere bei einem kontinuierlichen Hochsetzstellerbetrieb elektrische Verluste aufgrund eines Reverse-Recovery-Effekts herabgesetzt oder vermieden werden.

## Patentansprüche

1. Gleichspannungswandler (1), mit:
einem ersten Transformator (30), mit einer Primärwicklung (31) und einer Sekundärwicklung (32);
einem Wechselrichter (10), der an einem Eingang mit einem ersten Eingangsanschluss (E1) und einem zweiten Eingangsanschluss (E2) des Gleichspannungswandlers (1) elektrisch gekoppelt ist, und der an einem Ausgang mit der Primärwicklung (31) des ersten Transformators (30) elektrisch gekoppelt ist;
einem Gleichrichter (20), der eingangsseitig mit der Sekundärwicklung (32) des ersten Transformators (30) gekoppelt ist, und der ausgangsseitig mit einem ersten Ausgangsanschluss (A1) und einem zweiten Ausgangsanschluss (A2) des Gleichspanungswandlers (1) elektrisch gekoppelt ist; und
einer Kompensationseinrichtung (40), mit einem zweiten Transformator (42) und einem Schaltelement (41),
**dadurch gekennzeichnet, dass**
der zweite Transformator (42) eine Primärwicklung (43) und eine Sekundärwicklung (44) umfasst, wobei die Primärwicklung (43) des zweiten Transformators (42) zwischen dem ersten Eingangsanschluss (E1) des Gleichspannungswandlers (1) und einem Anschluss des Eingangs des Wechselrichters (10) angeordnet ist und wobei eine Serienschaltung aus dem Schaltelement (41) und der Sekundärwicklung (44) des zweiten Transformators (42) zwischen dem ersten Eingangsanschluss (E1) und dem zweiten Eingangsanschluss (E2) des Gleichspannungswandlers (1) angeordnet ist,
wobei der Gleichspannungswandler (1) dazu eingerichtet ist,
die Primärwicklung (43) des zweiten Transformators (42) in der Kompensationseinrichtung (40) zu laden (110), mittels Bereitstellen einer elektrischen Verbindung zwischen den Eingangsanschlüssen (E1, E2) des Wechselrichters (10),
die Primärwicklung (43) des zweiten Transformators (42) in der Kompensationseinrichtung (40) zu entladen (120), mittels Bereitstellen einer elektrischen Verbindung durch die Primärwicklung (31) des ersten Transformators (30);
und das Schaltelement (41) in der Kompensationseinrichtung (40) für eine vorbestimmte Zeitdauer am Ende des Entladens (120) der Primärwicklung (43) des zweiten Transformators (42) zu schließen (130).

2. Gleichspannungswandler (1) nach Anspruch 1, wobei die Kompensationseinrichtung (4) ferner eine Diode (45) umfasst, und wobei eine Serienschaltung der Diode (45), dem Schaltelement (41) und der Sekundärseite (44) des zweiten Transformators (42) zwischen dem ersten Eingangsanschluss (E1) und dem zweiten Eingangsanschluss (E2) des Gleichspannungswandlers (1) angeordnet ist.

3. Gleichspannungswandler (1) nach Anspruch 1 oder 2, wobei das Schaltelement (41) der Kompensationseinrichtung (40) einen Metalloxid-Feldeffekt-Transistor, MOSFET, umfasst.

4. Gleichspannungswandler (1) nach einem der Ansprüche 1 bis 3, wobei der Wechselrichter (10) zwei Halbbrücken mit jeweils zwei Halbleiterschaltern (M1-M4) umfasst.

5. Gleichspannungswandler (1) nach einem der Ansprüche 1 bis 4, wobei der Gleichrichter (20) einen aktiven Synchrongleichrichter umfasst.

6. Verfahren (100) zur Betrieb eines Gleichspannungswandlers (1) nach einem der Ansprüche 1 bis 6, mit den Schritten:
Laden (110) der Primärwicklung (43) des zweiten Transformators (42) in der Kompensationseinrichtung (40); wobei das Laden (110) der Primärwicklung (43) des zweiten Transformators (42) in der Kompensationseinrichtung (40) das Bereitstellen einer elektrischen Verbindung zwischen Anschlüssen des Eingangs des Wechselrichters (10) umfasst,
Entladen (120) der Primärwicklung (43) des zweiten Transformators (42) in der Kompensationseinrichtung (40); wobei das Entladen (120) der Primärwicklung (43) des zweiten Transformators (42) in der Kompensationseinrichtung (40) das Bereitstellen einer elektrischen Verbindung durch die Primärwicklung (31) des ersten Transformators (30) umfasst,
Schließen (130) des Schaltelements (41) in der Kompensationseinrichtung (40) für eine vorbestimmte Zeitdauer am Ende des Entladens der Primärwicklung (43) des zweiten Transformators (42); und
Wiederholen der zuvor genannten Schritte (S1-S3).

7. Verfahren (100) nach Anspruch 6, wobei die vorbestimmte Zeitdauer eine Zeitdauer von maximal 400 Nanosekunden umfasst.

## Claims

1. DC/DC converter (1) having:
a first transformer (30) having a primary winding (31) and a secondary winding (32);
an inverter (10) which is electrically coupled, at an input, to a first input connection (E1) and to a second input connection (E2) of the DC/DC converter (1) and is electrically coupled, at an output, to the primary winding (31) of the first transformer (30);
a rectifier (20) which is coupled, on the input side, to the secondary winding (32) of the first transformer (30) and is electrically coupled, on the output side, to a first output connection (A1) and to a second output connection (A2) of the DC/DC converter (1); and
a compensation device (40) having a second transformer (42) and a switching element (41),
**characterized in that**
the second transformer (42) comprises a primary winding (43) and a secondary winding (44), wherein the primary winding (43) of the second transformer (42) is arranged between the first input connection (E1) of the DC/DC converter (1) and a connection of the input of the inverter (10), and wherein a series circuit comprising the switching element (41) and the secondary winding (44) of the second transformer (42) is arranged between the first input connection (E1) and the second input connection (E2) of the DC/DC converter (1),
wherein the DC/DC converter (1) is configured to charge (110) the primary winding (43) of the second transformer (42) in the compensation device (40) by providing an electrical connection between the input connections (E1, E2) of the inverter (10),
to discharge (120) the primary winding (43) of the second transformer (42) in the compensation device (40) by providing an electrical connection through the primary winding (31) of the first transformer (30) ;
and to close (130) the switching element (41) in the compensation device (40) for a predetermined period at the end of the process of discharging (120) the primary winding (43) of the second transformer (42).

2. DC/DC converter (1) according to Claim 1, wherein the compensation device (4) also comprises a diode (45), and wherein a series circuit comprising the diode (45), the switching element (41) and the secondary side (44) of the second transformer (42) is arranged between the first input connection (E1) and the second input connection (E2) of the DC/DC converter (1).

3. DC/DC converter (1) according to Claim 1 or 2, wherein the switching element (41) of the compensation device (40) comprises a metal oxide field effect transistor, MOSFET.

4. DC/DC converter (1) according to one of Claims 1 to 3, wherein the inverter (10) comprises two half-bridges each having two semiconductor switches (M1-M4).

5. DC/DC converter (1) according to one of Claims 1 to 4, wherein the rectifier (20) comprises an active synchronous rectifier.

6. Method (100) for operating a DC/DC converter (1) according to one of Claims 1 to 6, having the steps of:
charging (110) the primary winding (43) of the second transformer (42) in the compensation device (40); wherein the process of charging (110) the primary winding (43) of the second transformer (42) in the compensation device (40) comprises providing an electrical connection between connections of the input of the inverter (10),
discharging (120) the primary winding (43) of the second transformer (42) in the compensation device (40); wherein the process of discharging (120) the primary winding (43) of the second transformer (42) in the compensation device (40) comprises providing an electrical connection through the primary winding (31) of the first transformer (30),
closing (130) the switching element (41) in the compensation device (40) for a predetermined period at the end of the process of discharging the primary winding (43) of the second transformer (42); and
repeating the steps (S1-S3) mentioned above.

7. Method (100) according to Claim 6, wherein the predetermined period comprises a period of at most 400 nanoseconds.

## Revendications

1. Convertisseur continu-continu (1), comprenant :
un premier transformateur (30) pourvu d'un enroulement primaire (31) et d'un enroulement secondaire (32) ;
un onduleur (10) qui est couplé électriquement au niveau d'une entrée à une première borne d'entrée (E1) et à une deuxième borne d'entrée (E2) du convertisseur continu-continu (1), et qui est couplé électriquement au niveau d'une sortie à l'enroulement primaire (31) du premier transformateur (30) ;
un redresseur (20) qui est côté entrée couplé à l'enroulement secondaire (32) du premier transformateur (30), et qui est côté sortie couplé électriquement à une première borne de sortie (A1) et à une deuxième borne de sortie (A2) du convertisseur continu-continu (1) ; et
un dispositif de compensation (40) pourvu d'un deuxième transformateur (42) et d'un élément de commutation (41),
**caractérisé en ce que** le deuxième transformateur (42) comprend un enroulement primaire (43) et un enroulement secondaire (44), dans lequel l'enroulement primaire (43) du deuxième transformateur (42) est disposé entre la première borne d'entrée (E1) du convertisseur continu-continu (1) et une borne de l'entrée de l'onduleur (10), et dans lequel une connexion série composée de l'élément de commutation (41) et de l'enroulement secondaire (44) du deuxième transformateur (42) est disposée entre la première borne d'entrée (E1) et la deuxième borne d'entrée (E2) du convertisseur continu-continu (1),
le convertisseur continu-continu (1) étant conçu pour
charger (110) l'enroulement primaire (43) du deuxième transformateur (42) dans le dispositif de compensation (40) en fournissant une liaison électrique entre les bornes d'entrée (E1, E2) de l'onduleur (10),
décharger (120) l'enroulement primaire (43) du deuxième transformateur (42) dans le dispositif de compensation (40) en fournissant une liaison électrique à travers l'enroulement primaire (31) du premier transformateur (30) ;
et fermer (130) l'élément de commutation (41) dans le dispositif de compensation (40) pendant une durée prédéterminée à la fin de la décharge (120) de l'enroulement primaire (43) du deuxième transformateur (42) .

2. Convertisseur continu-continu (1) selon la revendication 1, dans lequel le dispositif de compensation (4) comprend en outre une diode (45), et dans lequel une connexion série de la diode (45), de l'élément de commutation (41) et du côté secondaire (44) du deuxième transformateur (42) est disposée entre la première borne d'entrée (E1) et la deuxième borne d'entrée (E2) du convertisseur continu-continu (1).

3. Convertisseur continu-continu (1) selon la revendication 1 ou 2, dans lequel l'élément de commutation (41) du dispositif de compensation (40) comprend un transistor à effet de champ à grille métal-oxyde, MOSFET.

4. Convertisseur continu-continu (1) selon l'une quelconque des revendications 1 à 3, dans lequel l'onduleur (10) comprend deux demi-ponts pourvus respectivement de deux commutateurs semi-conducteurs (M1 à M4).

5. Convertisseur continu-continu (1) selon l'une quelconque des revendications 1 à 4, dans lequel le redresseur (20) comprend un redresseur synchrone actif.

6. Procédé (100) permettant de faire fonctionner un convertisseur continu-continu (1) selon l'une quelconque des revendications 1 à 6, comprenant les étapes consistant à :
charger (110) l'enroulement primaire (43) du deuxième transformateur (42) dans le dispositif de compensation (40) ; la charge (110) de l'enroulement primaire (43) du deuxième transformateur (42) dans le dispositif de compensation (40) comprenant la fourniture d'une liaison électrique entre les bornes de l'entrée de l'onduleur (10),
décharger (120) l'enroulement primaire (43) du deuxième transformateur (42) dans le dispositif de compensation (40) ; la décharge (120) de l'enroulement primaire (43) du deuxième transformateur (42) dans le dispositif de compensation (40) comprenant la fourniture d'une liaison électrique à travers l'enroulement primaire (31) du premier transformateur (30),
fermer (130) l'élément de commutation (41) dans le dispositif de compensation (40) pendant une durée prédéterminée à la fin de la décharge de l'enroulement primaire (43) du deuxième transformateur (42) ; et
répéter lesdites étapes (S1 à S3).

7. Procédé (100) selon la revendication 6, dans lequel la période prédéterminée comprend une durée d'un maximum de 400 nanosecondes.
